# EUROPÄISCHE PATENTSCHRIFT

(11) **EP 1 721 763 B1**
(45) Veröffentlichungstag und Bekanntmachung des Hinweises auf die Patenterteilung: **24.06.2009**
(21) Anmeldenummer: 06008349.0
(22) Anmeldetag: 21.04.2006
(51) Int. Cl.: B60H 1/00

(54) **Kältemittelleitungen für Klimageräte**
Cooling flud pipes for air conditioner
Canalisation de liquide réfrigérant pour climatisation

(30) Priorität: 11.05.2005 DE 102005022513
(43) Veröffentlichungstag der Anmeldung: 15.11.2006
(73) Patentinhaber: Behr GmbH & Co. KG, 70469 Stuttgart (DE)
(72) Erfinder: Kemle, Andreas, Dipl.-Ing., 74321 Bietigheim-Bissingen (DE); Schäfer, Bernd, Dipl.-Ing., 70176 Stuttgart (DE); Tscheppe, Thomas, Dipl.-Ing. (FH), 76461 Muggensturm (DE)

(56) Entgegenhaltungen:
- DE-A1- 10 317 184
- US-A- 5 521 340
- US-A1- 2005 044 872

## Beschreibung

Die Erfindung betrifft einen Kältemittelkreislauf für ein Kraftfahrzeug nach dem Oberbegriff des unabhängigen Anspruchs 1.

Zur Verbindung der einzelnen Komponenten eines Kältemittelkreislaufs werden beispielsweise bei Klimageräten für Kraftfahrzeuge üblicherweise Rohrleitungen und zum Teil flexible Schlauchleitungen verwendet. Dabei besteht das Bestreben, die Länge derartiger Verbindungsleitungen so weit wie möglich zu minimieren. Dieses Bestreben beruht nicht nur auf dem Bestreben, Herstellungskosten, Montageaufwand für das Klimagerät und das Gewicht des Kältekreislaufs nach Möglichkeit zu verringern. Aus der DE 103 17 184, der als nächstliegender Stand der Technik angesehen wird, ist ein Kältemittelkreislauf bekannt, wobei zur Verhinderung der Übertragung von Schwingungen Kältemittelleitungen verwendet werden, die einen gegenüber üblichen Kältemittelleitungen zumindest abschnittsweise verringerten freien Leitungsquerschnitt aufweisen. Ein großes Problem von längeren Verbindungsleitungen beruht vielmehr auch in dem Strömungswiderstand, den die Verbindungsleitung dem durch sie hindurchströmenden Kältemittel entgegenbringt. Dieser Strömungswiderstand wiederum führt insbesondere zu einem nicht unerheblichen Druckverlust, der bei den derzeit üblichen R134a-Kältekreisläufen durchaus im Bereich von einigen bar liegen kann (bei maximal auftretenden Drücken im Bereich von 30 - 35 bar im Betrieb) und bei den derzeit in der Entwicklung befindlichen R744-Klimageräten (CO₂ bzw. Kohlendioxid als Kältemittel) auch im Bereich von über 10 bar liegen kann (bei maximal auftretenden Drücken im Bereich von 130 - 140 bar beim Betrieb). Diese Druckabfälle bewirken nicht nur eine entsprechend höhere Leistungsanforderung an den Kompressor (damit dieser die auftretenden Druckverluste kompensieren kann), was entsprechend kostenaufwändig ist, sondern sie beeinträchtigen u. a auch die Leistung und den Wirkungsgrad des entsprechenden Klimageräts.

Zum Teil ist es jedoch unumgänglich, auch längere Kältemittelleitungen vorzusehen. Dies betrifft beispielsweise auch besonders hohen Komfortansprüchen genügenden Klimageräte, die beispielsweise im Heckbereich eines Fahrzeugs über einen zusätzlichen Verdampfer verfügen, damit auch im rückseitigen Teil des Fahrzeugs eine komfortable Innenraumtemperatur erreicht werden kann. Dies gilt umso mehr, je länger das Fahrzeug ist und je größer der Fahrzeuginnenraum ist. In diesem Zusammenhang seien insbesondere Luxuslimousinen, aber auch beispielsweise Kleinbusse bzw. Kraftomnibusse genannt.

In einem solchen Fall ist es bislang üblich, den Durchmesser der verwendeten Kältemittelleitungen - insbesondere der Kältemittelleitungen mit einer größeren Länge - mit einem möglichst großen Rohrleitungsquerschnitt zu versehen, um die kältemittelseitigen Druckabfälle zu minimieren. Der Rohrleitungsquerschnitt dieser eine größere Länge aufweisenden Kältemittelleitungen wird dabei zumindest ebenso groß wie die sonstigen verwendeten Kältemittelleitungen des Kühlkreislaufs gewählt. Als übliche Leitungsquerschnitte für Hochdruckleitungen sind im Falle von R134a als Kältemittel Durchmesser von 8 mm bis 10 mm, im Falle von Niederdruckleitungen bei R134a als verwendetem Kältemittel Durchmesser von 14 mm bis 16 mm üblich. Bei den derzeit in der Entwicklung befindlichen R744-Klimageräten betragen die üblichen Leitungsdurchmesser bei Hochdruckleitungen 5 mm, 6 mm, ggf. auch 7 mm, wohingegen sie im Falle von Niederdruckleitungen bei meist 7 mm, 8 mm, 9 mm oder 10 mm liegen. Bei üblichen Klimageräten treten im Falle von R134a in Niederdruckleitungen typischerweise Strömungsgeschwindigkeiten im Bereich von bis zu 2 m/s vor dem Verdampfer bzw. im Bereich von bis zu 20 m/s nach dem Verdampfer (aufgrund der Zustandsänderung) auf. Bei Hochdruckleitungen können die Geschwindigkeiten im Bereich bis zu 10 m/s nach dem Verdichter bzw. 2 m/s vor dem Expansionsorgan liegen. Jedoch können beispielsweise in Extremzuständen ggf. kurzfristig auch höhere Geschwindigkeiten auftreten. Demgegenüber liegen übliche Strömungsgeschwindigkeiten im Falle von R744 in Niederdruckleitungen im Bereich von 0-3 m/s nach dem Expansionsorgan und vor dem Verdampfer bzw. 0-15 m/s nach dem Verdampfer und vor dem Verdichter. Bei Hochdruckleitungen treten im Fall von R744 als Kältemittel üblicherweise Geschwindigkeiten von 0-6 m/s, ggf. auch von 0-10 m/s nach dem Verdichter und vor dem Gaskühler, bzw. 0-3 m/s nach dem Gaskühler und vor dem Expansionsventil auf. Auch hier können beispielsweise in Extremzuständen kurzfristig höhere Geschwindigkeiten auftreten.

Kältemittelleitungen mit großem Durchmesser erweisen sich jedoch auch als nachteilig. So sind diese aufgrund ihrer Größe und Dimensionierung entsprechend groß, so dass ein entsprechender Bauraum zum Verlegen derselben erforderlich ist, entsprechend kostenträchtig in der Herstellung und darüber hinaus muss aufgrund des durch die Rohrleitungen beim Kältemittelkreislauf zusätzlich auftretenden Innenvolumens eine entsprechende Zusatzmenge an Kältemittel in den Kältemittelkreislauf eingebracht werden. Dies erweist sich insbesondere im Falle von R744-Kältemittelkreisläufen als nachteilig. Das hat seinen Grund darin, dass es bei Kraftfahrzeugklimageräten mit R744 als Kältemittel aufgrund der thermodynamischen Eigenschaften von Kohlendioxid regelmäßig vorkommt, dass sich das im Kältemittelkreislauf befindliche Kohlendioxid bei in der Praxis durchaus auftretenden Umgebungsbedingungen vollständig in einem überkritischen Zustand befinden kann und dementsprechend kein flüssiges Kältemittel mehr verbleibt. Dies hat entsprechend hohe Stillstandsdrücke des Kältemittelkreislaufs zur Folge, wobei der Stillstandsdruck auch von der Menge des im Kältemittelkreislauf vorhandenen Kältemittels abhängt. Um unzulässig hohe Stillstandsdrücke zu vermeiden, sind ggf. große Akkumulatorenvolumina zum Ausgleich erforderlich, was entsprechend kostenträchtig ist und entsprechende Anforderungen an den erforderlichen Bauraum stellt.

Darüber hinaus wurde von den Erfindern erkannt, dass es bei größeren Leitungsdurchmessern in Verbindung mit größeren Leitungslängen, insbesondere im Falle von R744 als Kältemittel, zu einer Entmischung von gasförmiger und flüssiger Phase des Kältemittels kommen kann, was sowohl die Zuführungsleitungen von Kältemittel zum Verdampfer hin, insbesondere von bereits expandiertem Kältemittel zum Verdampfer hin, als auch die Rückführleitungen vom Verdampfer weg betrifft. Diese Entmischung kann sich insbesondere negativ auf die Kälteleistung des entsprechenden Klimageräts auswirken, kann aber auch durch sich im abgetrennten, flüssigen Teil des Kältemittels ansammelndes Schmiermittel auch zu schwerwiegenden Defekten vor allen Dingen des Kompressors führen. Das hat seinen Grund darin, dass bei einem entmischten Kältemittel in der Regel vornehmlich die gasförmige Phase transportiert wird, somit die flüssige Phase nur noch sehr langsam strömt und damit das Kältemittel sowie das darin gelöste Schmiermitte dem Kältekreislauf quasi entzogen wird; dementsprechend steht beispielsweise das Kältemittel bzw. das im Kältemittel gelöste Schmiermittel nicht mehr zur Schmierung des Kompressors zur Verfügung.

Die Erfinder haben es sich daher zur Aufgabe gemacht, einen verbesserten Kältemittelkreislauf vorzuschlagen, bei dem die beim Stand der Technik bislang unvermeidlichen Probleme zumindest teilweise beseitigt werden bzw. zumindest gemindert werden. Insbesondere haben es sich die Erfinder zur Aufgabe gemacht, Kältemittelleitungen vorzuschlagen, bei denen es zu keiner Entmischung von gasförmiger und flüssiger Phase des Kältemittels kommt, bei denen der Stillstandsdruck des Geräts nicht übermäßig ansteigt und/oder die einfach und kostengünstig bei der Herstellung bzw. Montage sind.

Der im Anspruch 1 vorgeschlagener Kältemittelkreislauf löst diese Aufgabe. Vorteilhafte Weiterbildungen des vorgeschlagenen Kältemittelkreislaufs sind Gegenstand von Unteransprüchen.

Es wird vorgeschlagen, im Kältemittelkreislauf eine Kältemittelleitung zur Verbindung wenigstens zweier, eine erhebliche Entfernung voneinander aufweisender Komponenten eines Kältemittelkreislaufs dahin gehend weiterzubilden, dass diese einen gegenüber üblichen Kältemittelleitungen zumindest abschnittsweise verringerten freien Leitungsquerschnitt aufweist. Die Erfinder haben erkannt, dass überraschenderweise mit einem - im Verhältnis zu üblichen Leitungsquerschnitten - ggf. deutlich verminderten Leitungsquerschnitt einige Probleme, die bei der Verwendung von relativ langen Kältemittelleitungen, insbesondere bei der Verwendung von R744 als Kältemittel, auftreten, beseitigt oder doch zumindest deutlich gemindert werden können. So wird durch die vorgeschlagene Ausbildung, insbesondere speziell in Teillastbetriebspunkten, die ansonsten relativ niedrige Strömungsgeschwindigkeit des Kältemittels in der Kältemittelleitung erhöht, so dass beispielsweise in der Saugleitung eines zusätzlichen Verdampfers eine Trennung von dampfförmiger und flüssiger Phase des Kältemittels in nur noch verringertem Maße oder aber im Extremfall überhaupt nicht mehr auftritt. Dadurch kann aber auch in diesen Leitungen eine übermäßige Ansammlung an Schmiermittel vermieden werden, so dass insbesondere eine ausreichende Versorgung des Kompressors mit Schmierstoff sichergestellt werden kann. Darüber hinaus ist es mit der vorgeschlagenen Kühlmittelleitung möglich, die erforderliche Masse an Kältemittel, die zur Befüllung des resultierenden Kältemittelkreislaufs benötigt wird, zu reduzieren, wodurch es beispielsweise ermöglicht wird, dass die Volumina von vorzusehenden Kältemittelakkumulatoren verkleinert werden können. Auch wird es dadurch erleichtert, insbesondere bei R744-Kältemittelkreisläufen unzulässig hohe Stillstandsdrücke zu vermeiden.

Speziell wird vorgeschlagen, dass der Leitungsquerschnitt derart gewählt ist, dass die freie Querschnittsfläche der Leitung weniger als 50 %, vorzugsweise weniger als 35 %, besonders vorzugsweise weniger als 25 % der üblichen freien Querschnittsfläche beträgt. Jedoch sind in diesem Zusammenhang auch andere Zahlenwerte denkbar, wie beispielsweise 70 %, 65 %, 60 %, 55 %, 45 %, 40 %, 30 % oder aber auch 20 % der üblichen freien Querschnittsfläche. Ferner sollen im Rahmen dieser Anmeldung bei sämtlichen genannten diskreten Zahlenwerten bzw. im Falle von Bereichsangaben bei (Halb-) Intervallen sämtliche Zahlenwerte, insbesondere sämtliche ganzen Zahlen, sowie Zehntelwerte und Hundertstelwerte von ganzen Zahlen als ausdrücklich offenbart und beliebig einsetzbar gelten. Insbesondere die oben genannten Zahlenwerte erweisen sich als geeigneter Kompromiss, um einerseits die bereits genannten Vorteile zu realisieren, andererseits jedoch übermäßige Druckabfälle in den Leitungen zu vermeiden, die schlussendlich wieder zu einer Verschlechterung des Gesamtsystems führen könnten.

Als vorteilhaft erweist sich die Erfindung insbesondere bei Kühlmittelleitungen, die eine Länge von wenigstens 1 m, vorzugsweise 1,50 m, besonders vorzugsweise 2 m, insbesondere 2,50 m, aufweisen. Jedoch sind - wie bereits erwähnt - auch andere Zahlenwerte denkbar, wie beispielsweise 1,25 m, 1,75 m, 2,25 m, 2,75 m, 3 m, 3,25 m, 3,50 m.

Als vorteilhaft erweist sich die Erfindung weiterhin, wenn die Länge der Kältemittelleitung größer als 1/4, vorzugsweise größer als 1/3, besonders vorzugsweise größer als die Hälfte der Länge des Fahrzeugs und/oder der Länge des Motorraums des Fahrzeugs, für das die entsprechende Kältemittelleitung verwendet wird, beträgt.

Als konkrete Zahlenwerte für den Durchmesser einer als Hochdruckleitung ausgebildeten Kältemittelleitung haben sich 2,5 mm, 3 mm, 3,5 mm, 4,5 mm oder 5 mm erwiesen. Im Falle von Niederdruckleitungen erwiesen sich Durchmesser von nicht mehr als 3,5 mm, 4 mm, 4,5 mm, 5 mm, 5,5 mm oder 6,0 mm als vorteilhaft. Als weitere Zahlenwerte seien 1,5 mm, 1,75 mm, 2,0 mm, 2,25 mm, 2,75 mm, 3,25 mm, 3,75 mm, 4,25 mm, 4,75 mm, 5,25 mm, 5,75 mm, 6,25 mm und 6,5 mm genannt.

Vorgeschlagen wird weiterhin ein Kältemittelkreislauf für ein Fahrzeug, insbesondere für ein Kraftfahrzeug, vorzugsweise für einen Personenkraftwagen mit wenigstens einer Kältemittelleitung mit verringertem Querschnitt, so wie diese vorab beschrieben wurde.

Erfindungsgemäß erweist es sich in diesem Zusammenhang als sinnvoll, wenn der freie Leitungsquerschnitt der Kältemittelleitung mit verringertem Leitungsquerschnitt kleiner als der freie Leitungsquerschnitt zumindest einer der übrigen Kältemittelleitungen des Kältemittelkreislaufs ist. Als Kältemittelleitungen mit verringertem Leitungsquerschnitt eignen sich hier insbesondere im Verhältnis zu anderen Kältemittelleitungen längere, insbesondere die längsten im System verwendeten Kältemittelleitungen.

So können bei dem vorgeschlagenen Kältemittelkreislauf derartige Kältemittelleitungen mit verringertem Querschnitt insbesondere zur Verbindung zwischen einem vorderen Bereich, einem mittleren Bereich und/oder einem rückwärtigen Bereich des Fahrzeugs verwendet werden.

Erfindungsgemäß wirddie vorgeschlagene Kältemittelleitung mit verringertem Leitungsquerschnitt zum Anschluss eines zusätzlichen Verdampfers, wie beispielsweise eines Heckverdampfers, verwendet. Dies schließt sowohl Vorlaufleitungen als auch Rücklaufleitung ein.

Insbesondere im Fall vom Vorlaufleitungen ist es auch möglich, dass in einem Anfangs- und/oder Endbereich der Kältemittelleitung mit verringertem Leitungsquerschnitt ein Expansionsorgan angeordnet ist. Je nach Einbauort kann es vermieden werden, dass sich die Kältemittelleitung mit einem zweiphasigen Gemisch füllt, welches ggf. eine Neigung zur Trennung in seine beiden Phasen entwickelt bzw. kann es vermieden werden, dass sich die Kältemittelleitung mit Kältemittel von beispielsweise relativ hoher Dichte füllt, so dass in den übrigen Bereichen des Kältemittelkreislaufs ein Mangel an Kältemittel entstehen könnte.

Darüber hinaus wurde festgestellt, dass es vorteilhaft ist, wenn bei einem Kältemittelkreislauf der freie Leitungsquerschnitt der Kältemittelleitungen mit verringertem Leitungsquerschnitt derart gewählt ist, dass beim Betrieb des Kältemittelkreislaufs, das durch die Kältemittelleitungen mit verringertem Leitungsquerschnitt strömende Kältemittel Strömungsgeschwindigkeiten von zumindest 125%, 150%, 175%, 200% 225%, 250%, 275% bzw. 300% der bei bekannten Klimaanlagen auftretenden Geschwindigkeiten aufweist.

Auch wenn der vorgeschlagene Kältemittelkreislauf grundsätzlich mit unterschiedlichen Kälternitteln befüllt werden kann, so erweist sich eine Verwendung von R744 (Kohlendioxid) als Kältemittel als besonders vorteilhaft.

Weitere Details und Vorteile der Erfindung werden im Folgenden unter Bezugnahme auf zu bevorzugende Ausführungsbeispiele der Erfindung und unter Bezugnahme auf die beigefügten Zeichnungen näher erläutert.

Es zeigt:
- Figur 1: die schematische Anordnung eines Klimageräts mit Heckverdampfer in einem Pkw;
- Figur 2: ein Blockschaltbild eines ersten Ausführungsbeispiels eines Klimageräts mit Heckverdampfer;
- Figur 3: ein Blockschaltbild eines zweiten Ausführungsbeispiels eines Klimageräts mit Heckverdampfer;
- Figur 4a und 4b: eine typische Rohrleitung und eine Rohrleitung mit verringertem Durchmesser im Querschnitt.

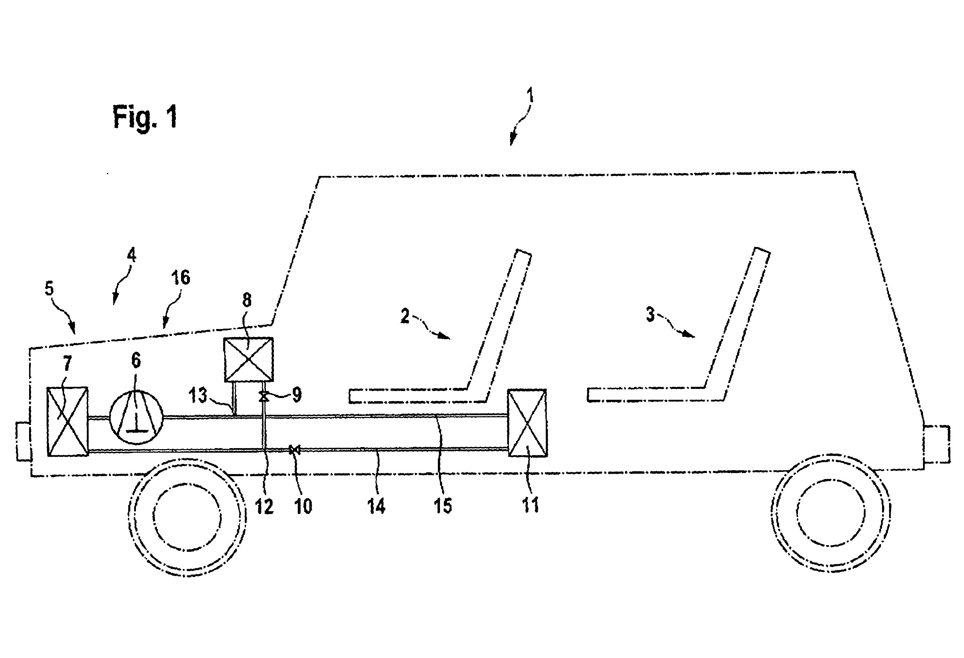

Figur 1 zeigt einen Personenkraftwagen mit zwei Sitzreihen 2, 3 für insgesamt typischerweise 4 oder 5 Personen. Im vorliegend vorne befindlichen Motorraum 5 sind, in an sich bekannter Weise die typischen Komponenten eines Klimageräts angeordnet, nämlich ein Kompressor 6, ein Gaskühler bzw. Kondensator 7, eine Drossel 9 sowie ein Verdampfer 8, die in dieser Reihenfolge von einem Kältemittel durchflossen werden. Obgleich vorliegend nicht dargestellt, ist es insbesondere bei der Verwendung von R744 als Kältemittel möglich, auch einen so genannten inneren Wärmeübertrager 19 zur Leistungs- und Effizienzerhöhung des Geräts vorzusehen. In Figur 1 wurde aus Darstellungsgründen auf unnötige Details verzichtet.

Damit das im Fahrzeug 1 eingebaute Klimagerät 4 auch hohen Komfortansprüchen genügt und beispielsweise auch die auf den Rücksitzen 3 befindlichen Personen eine für sie individuelle Temperatur einstellen können bzw. damit diese auch bei einem sehr großen Fahrzeuginnenraum mit ausreichend gekühlter Luft versorgt werden können, ist bei dem in Figur 1 schematisch skizzierten Klimagerät 4 ein zusätzlicher Heckverdampfer 11 vorgesehen. Der Heckverdampfer 11 ist über - ggf. schaltbare - Verteilorgane 12 und 13 an den Hauptkältekreislauf 16 des Klimageräts 4 angeschlossen. Bei dem dargestellten Klimagerät 4 ist zusätzlich ein dem ersten Verteilorgan 12 unmittelbar nachgeschaltetes Expansionsventil 10 vorgesehen. Das nach der Expansion in diesem zusätzlichen Expansionsventil 10 abgekühlte Kältemittel liegt in Form eines 2-Phasen-Gemischs, bestehend aus gasförmiger und flüssiger Phase, vor, wobei im Falle von R744 ein Anteil von typischerweise 30 - 40 % in gasförmigem Zustand vorliegt. Dieses Gemisch wird dem Heckverdampfer 11 über eine Vorlaufleitung 14 zugeführt und über die Rücklaufleitung 15 dem vorne liegenden Hauptkältekreislauf 16 zurückgeführt.

Wie erwähnt können insbesondere im Falle von R744 an geeigneten Stellen im Kältekreislauf des Klimageräts 4 noch innere Wärmeübertrager 19 und Kältemittelakkumulatoren 17, 18 hinzugefügt werden. Meist wird jedoch in der zum bzw. in der vom Heckverdampfer 11 führenden Leitung kein Kältemittelakkumulator 18 verwendet.

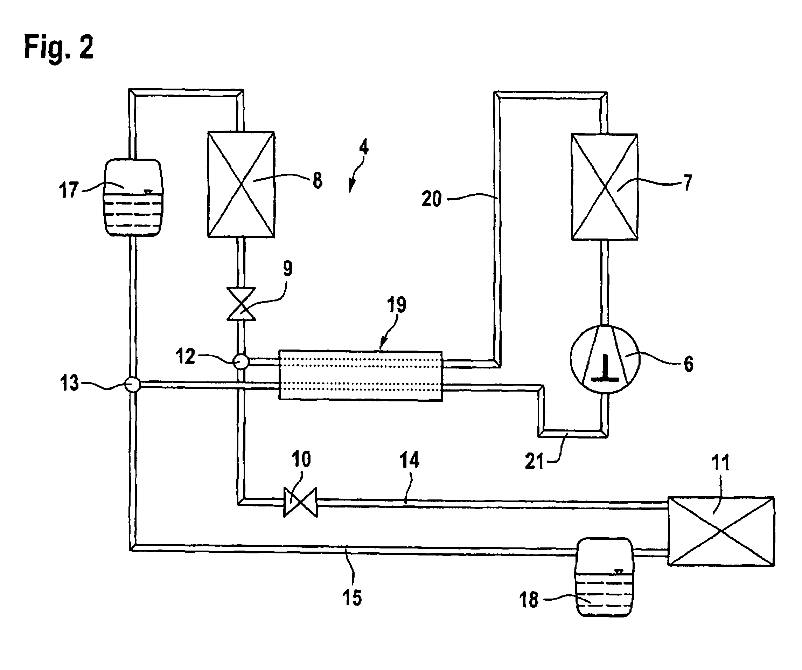

Das in Figur 1 dargestellte Klimagerät 4 ist in Figur 2 nochmals ausführlicher als Blockschaltbild skizziert. In Figur 2 sind darüber hinaus die - aus Platzgründen in Figur 1 nicht dargestellten - Kältemittelsammler 17, 18 sowie der innere Wärmeübertrager 19 eingezeichnet.

Beim in Figur 2 skizzierten Aufbau des Klimageräts 4 ist sowohl die zum Heckverdampfer 11 führende Vorlaufleitung 14 als auch die von diesem zurückführende Rücklaufleitung 15 in Strömungsrichtung des Kältemittels gesehen nach der zusätzlichen Drossel 10 angeordnet, so dass sich beide im Niederdruckteil des Klimageräts 4 befinden. Als typische Durchmesser für die sich im Niederdruckteil befindliche Vorlaufleitung 14 und Rücklaufleitung 15 werden Durchmesser vorgeschlagen, die derart gewählt werden, dass der freie Strömungsquerschnitt beispielsweise 25 % des freien Strömungsquerschnitts der sonstigen im Hauptkreislauf 16 des Klimageräts 14 befindlichen Niederdruckrohre aufweist, also beispielsweise 25 % des freien Querschnitts der Saugleitung 21 zum Kompressor 6. Wesentlich ist es dabei nicht, einen Wert von exakt 25 % einzuhalten, sondern vielmehr den freien Strömungsquerschnitt deutlich zu verringern. So wäre beispielsweise auch ein auf 60 %, 55 %, 50 %, 45 %, 40 %, 35 %, 30 %, 25 %, 20 % und/oder 15 % verringerter Strömungsquerschnitt denkbar. Auch andere, insbesondere zwischen den soeben genannten Zahlen liegende Werte sind selbstverständlich möglich.

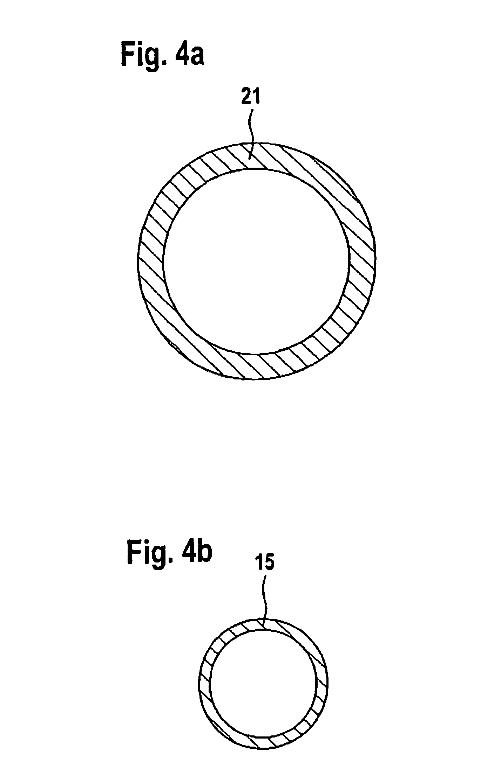

Die Größenverhältnisse sind rein beispielhaft in Figur 4 einander gegenüber gestellt. Es ist selbstverständlich auch möglich, abweichend von dem in Figur 4 dargestellten kreisrunden Querschnittsprofil auch andere Querschnittsgeometrien zu verwenden, wie insbesondere ovale Querschnittsgeometrien, viereckige Querschnittsgeometrien (ggf. mit abgerundeten Ecken) oder aber auch n-eckige Querschnittsgeometrien (ebenfalls ggf. mit abgerundeten Ecken), wobei n insbesondere die Werte 3, 5, 6, 7 und 8 einnehmen kann.

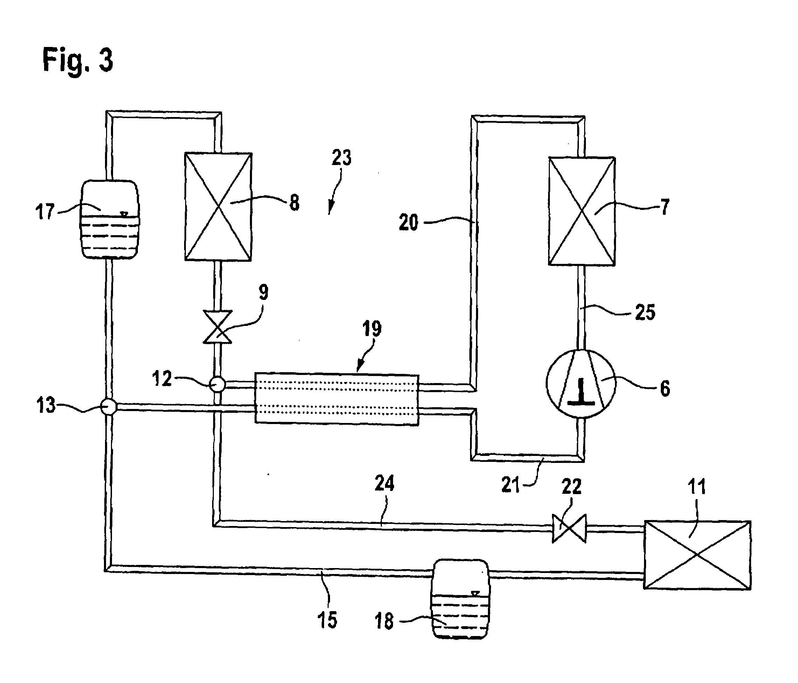

In Figur 3 ist das Blockschaltbild einer zweiten Ausführungsvariante eines Heckklimageräts 23 skizziert. Der Aufbau des in Figur 3 dargestellten Heckklimageräts 23 entspricht dabei weitestgehend dem Aufbau des in Figur 2 dargestellten Heckklimageräts 4. Jedoch ist das zweite Expansionsorgan 22 - abweichend vom zweiten Expansionsorgan 10 in Figur 2 - nunmehr unmittelbar vor dem Heckverdampfer 11 angeordnet. Dadurch ist die Zuführleitung 24, welche vom Verteilorgan 12 in Richtung zum Heckverdampfer 11 führt, nunmehr im Hochdruckteil des Klimageräts 23 angesiedelt. Dementsprechend wird die Vorlaufleitung 23 hinsichtlich der Reduzierung ihres freien Strömungsquerschnitts nunmehr üblicherweise auf die Strömungsquerschnitte der sonstigen, sich im Hochdruckteil des Klimageräts 23 befindlichen Leitungsquerschnitte angepasst. Solche Leitungsquerschnitte sind beispielsweise die vom Kompressor 6 zum Gaskühler/Kondensator 7 führende Verbindungsleitung 25 bzw. die vom Gaskühler/Kondensator 7 zum inneren Wärmeübertrager 19 führende Verbindungsleitung 20.

Die vorgeschlagenen Verbindungsleitungen 14, 15, 24, welche zum Heckverdampfer 11 hinführen bzw. von diesem wegführen und eine bedeutende Länge aufweisen, reduzieren die Menge des für das Gesamtklimagerät 4, 23 erforderlichen Kältemittels zum Teil beträchtlich. Auch werden, insbesondere im Falle der zum Heckverdampfer 11 führenden Zulaufleitung 14 in Figur 2, sowie der vom Heckverdampfer 11 ausgehenden Rücklaufleitung 15 Probleme, die durch eine Entmischung des 2-phasig vorliegenden Kältemittels entstehen können, wirksam verringert bzw. vermieden. Darüber hinaus sind die vorgeschlagenen Leitungen mit reduziertern Querschnitt kostengünstig in der Herstellung, einfacher im Einbau und benötigen darüber hinaus weniger Bauraum.

Zwar fällt an den vorgeschlagenen Verbindungsleitungen ein unter Umständen höherer Druck ab, jedoch hat sich erwiesen, dass dies insbesondere im Falle von R744 als Kältemittel nur relativ geringe bzw. vernachlässigbare Probleme nach sich zieht. Im Ergebnis wird mit den vorgeschlagenen Kältemittelleitungen 14, 15, 24 eine unter Umständen erhebliche Verbesserung des Gesamtklimageräts 4, 23 erzielt.

## Patentansprüche

1. Kältemittelkreislauf (16) für ein Kraftfahrzeug mit einem Kompressor (6), einem Kondensator (7) oder Gaskühler, einer Drossel (9) und einem ersten Verdampfer (8) die von Kältemittel durchflossen werden, wobei weiterhin ein Heckverdampfer (11) vorgesehen ist, welcher für den mittleren oder hinteren Bereich des Fahrzeugs (1) vorgesehen ist, wobei der Heckverdampfer (11) über eine Vorlaufleitung (14) und eine Rücklaufleitung (15) mit dem Kältemittelkreislauf (16) verbunden ist, **dadurch gekennzeichnet, dass** die Vorlaufleitung (14) und die Rücklaufleitung (15) einen gegenüber üblichen Kältemittelleitungen (21) zumindest abschnittsweise verringerten freien Leitungsquerschnitt aufweisen.

2. Kältemittelkreislauf nach Anspruch 1, **dadurch gekennzeichnet, dass** der Leitungsquerschnitt derart gewählt ist, dass die freie Querschnittsfläche (15) weniger als 50 %, vorzugsweise weniger als 35 %, besonders vorzugsweise weniger als 25 % der üblichen freien Querschnittsfläche (21) beträgt.

3. Kältemittelkreislauf nach Anspruch 1 oder 2, **dadurch gekennzeichnet, dass** die Länge der Kältemittelleitung (14, 15, 24) wenigstens 1 m, vorzugsweise 1,50 m, besonders vorzugsweise 2 m, insbesondere 2,50 m, beträgt.

4. Kältemittelkreislauf nach einem der vorangehenden Ansprüche, **dadurch gekennzeichnet, dass** die Länge der Kältemittelleitung (14, 15) größer als 1/4, vorzugsweise größer als 1/3, besonders vorzugsweise mehr als die Hälfte der Länge des Fahrzeugs (1) und/oder der Länge des Motorraums (4) des Fahrzeugs beträgt.

5. Kältemittelkreislauf nach einem der vorangehenden Ansprüche, **dadurch gekennzeichnet, dass** der Durchmesser einer als Hochdruckleitung (24) ausgebildeten Kältemittelleitung nicht mehr als 2,5 mm, 3 mm, 3,5 mm, 4,5 mm oder 5 mm beträgt und/oder der Durchmesser einer als Niederdruckleitung (14, 15) ausgebildeten Kältemittelleitung nicht mehr als 3,5 mm, 4 mm, 4,5 mm, 5 mm, 5,5 mm oder 6,0 mm beträgt.

6. Kältemittelkreislauf nach einem der Ansprüche 1 bis 5, **dadurch gekennzeichnet, dass** in einem Anfangs- und/oder Endbereich der Kältemittelleitung (14, 24) mit verringertem Leitungsquerschnitt ein Expansionsorgan (10) angeordnet ist.

7. Kältemittelkreislauf nach einem der Ansprüche 1 bis 6, welcher R744 als Kältemittel aufweist.

## Claims

1. Refrigerant circuit (16) for a motor vehicle, with a compressor (6), a condenser (7) or gas cooler, a restrictor (9) and a first evaporator (8), through which components refrigerant passes, wherein a rear evaporator (11) is provided for the middle and rear regions of the vehicle (1), the rear evaporator (11) being connected to the refrigerant circuit (16) by a supply line (14) and a return line (15), **characterised in that** at least some sections of the supply line (14) and the return line (15) have a reduced free line cross-section compared to the standard refrigerant lines (21).

2. Refrigerant circuit according to claim 1, **characterised in that** the line cross-section is chosen such that the free cross-sectional area (15) is less than 50%, preferably less than 35% and in particular less than 25% of the standard free cross-sectional area (21).

3. Refrigerant circuit according to claim 1 or 2, **characterised in that** the length of the refrigerant line (14, 15, 24) is at least 1 m, preferably 1.50 m, particularly preferably 2 m and in particular 2.50 m.

4. Refrigerant circuit according to any of the preceding claims, **characterised in that** the length of the refrigerant line (14, 15) is more than 1/4, preferably more than 1/3 and in particular more than half of the length of the vehicle (1) and/or the length of the engine compartment (4) of the vehicle.

5. Refrigerant circuit according to any of the preceding claims, **characterised in that** the diameter of a refrigerant line designed as a high-pressure line (24) is no more than 2.5 mm, 3 mm, 3.5 mm, 4.5 mm or 5 mm and/or the diameter of a refrigerant line designed as a low-pressure line (14, 15) is no more than 3 mm, 3.5 mm, 4 mm, 4.5 mm, 5 mm, 5.5 mm or 6 mm.

6. Refrigerant circuit according to any of claims 1 to 5, **characterised in that** an expansion device (10) is provided in a starting and/or end region of the refrigerant line (14, 24) with reduced line cross-section.

7. Refrigerant circuit according to any of claims 1 to 6, which uses R744 as a refrigerant.

## Revendications

1. Circuit de fluide frigorigène (16) pour un véhicule automobile, comprenant un compresseur (6), un condenseur (7) ou un refroidisseur de gaz, un étranglement (9) et un premier évaporateur (8), qui sont traversés par le fluide frigorigène où, en outre, il est prévu un évaporateur arrière (11) qui est prévu pour la zone centrale ou arrière du véhicule (1), où l'évaporateur arrière (11) est raccordé au circuit de fluide frigorigène (16), par une conduite de départ (14) et par une conduite de retour (15),
**caractérisé en ce que** la conduite de départ (14) et la conduite de retour (15) présentent une section de conduite libre réduite, au moins partiellement, par rapport à des conduites habituelles (21) de fluide frigorigène.

2. Circuit de fluide frigorigène selon la revendication 1, **caractérisé en ce que** la section de conduite est choisie de manière telle, que la surface de section libre (15) soit de moins de 50 %, de préférence de moins de 35 %, en particulier de préférence de moins de 25 % par rapport à la surface de section libre habituelle (21).

3. Circuit de fluide frigorigène selon la revendication 1 ou 2, **caractérisé en ce que** la longueur de la conduite de fluide frigorigène (14, 15, 24) est au moins de 1 m, de préférence de 1,50 m, en particulier de préférence de 2 m, notamment de 2,50 m.

4. Circuit de fluide frigorigène selon l'une quelconque des revendications précédentes, **caractérisé en ce que** la longueur de la conduite de fluide frigorigène (14, 15) est égale à plus du quart (¼), de préférence égale à plus du tiers (⅓), en particulier de préférence égale à plus de la moitié de la longueur du véhicule (1) et / ou du compartiment moteur (4) du véhicule.

5. Circuit de fluide frigorigène selon l'une quelconque des revendications précédentes, **caractérisé en ce que** le diamètre d'une conduite de fluide frigorigène configurée comme une conduite à haute pression (24) n'est pas supérieur à 2,5 mm, à 3 mm, à 3,5 mm, à 4,5 mm ou à 5 mm et / ou le diamètre d'une conduite de fluide frigorigène configurée comme une conduite à basse pression (14, 15) n'est pas supérieur à 3,5 mm, à 4 mm, à 4,5 mm, à 5 mm, à 5,5 mm ou à 6,0 mm.

6. Circuit de fluide frigorigène selon l'une quelconque des revendications 1 à 5, **caractérisé en ce qu'**un détendeur (10) à section de conduite réduite est disposé dans une zone initiale et / ou terminale de la conduite de fluide frigorigène (14, 24).

7. Circuit de fluide frigorigène selon l'une quelconque des revendications 1 à 6, qui présente du R744 servant de fluide frigorigène.
